# EUROPÄISCHE PATENTSCHRIFT

(11) **EP 3 911 877 B1**
(45) Veröffentlichungstag und Bekanntmachung des Hinweises auf die Patenterteilung: **04.06.2025**
(21) Anmeldenummer: 20700881.4
(22) Anmeldetag: 14.01.2020
(51) Int. Cl.: F16H 57/00, F16H 61/30, F16H 61/32, F16H 63/30

(54) **AKTUATOREINHEIT**
ACTUATOR UNIT
UNITÉ D'ACTIONNEMENT

(30) Priorität: 16.01.2019 DE 102019200498
(43) Veröffentlichungstag der Anmeldung: 24.11.2021
(73) Patentinhaber: KNORR-BREMSE Systeme für Nutzfahrzeuge GmbH, 80809 München (DE)
(72) Erfinder: GEIS-ESSER, Daniel, 81377 München (DE)
(86) Internationale Anmeldenummer: PCT/EP2020/050800
(87) Internationale Veröffentlichungsnummer: WO 2020/148272

(56) Entgegenhaltungen:
- CN-A- 108 561 549
- DE-A1- 102005 028 122
- DE-A1- 102008 015 173
- DE-A1- 102014 105 899
- DE-A1- 102016 006 751
- DE-A1- 102016 101 591
- DE-A1- 102017 115 069
- JP-A- H07 127 739
- JP-A- S60 249 755
- US-A1- 2018 231 105
- US-B2- 8 738 257

## Beschreibung

Die vorliegende Erfindung betrifft ein Getriebe.

Getriebe werden mittels einem oder mehreren Betätigungselementen, welche mit Schaltelementen des Getriebes in Eingriff gebracht werden und diese auslenken, geschaltet. Dabei bewirkt eine Auslenkung eines Schaltelements in eine Schaltstellung, dass eine drehfeste Verbindung beispielsweise eines Zahnrades mit einer Welle hergestellt oder wieder gelöst wird. Es wird demnach ein Gang des Getriebes eingelegt oder wieder gelöst. Das Schaltelement steht üblicherweise mit weiteren Elementen des Getriebes, beispielsweise mit einer Schaltmuffe, in Kontakt. Ist kein Gang eingelegt, so befindet sich das Schaltelement in einer neutralen Schaltstellung, also einer Neutralstellung.

Der Begriff "Schaltelement" ist dabei stellvertretend für sämtliche Elemente eines Getriebes zu verstehen, die dazu ausgebildet sind, einen Gang des Getriebes einzulegen bzw. zu lösen. Beispielsweise schließt sich an ein Schaltelement ein Gestänge an, welches das Schaltelement mit einer Schaltgabel verbindet, welche schließlich dazu ausgebildet ist die Schaltmuffe zu verschieben. Es sind jedoch auch Ausführungsformen von Getrieben denkbar, welche beispielsweise direkten Zugriff auf die Schaltgabeln erlauben. Ferner können Getriebe vorgesehen sein, deren Schaltelemente keine Schaltgabeln aufweisen. Schaltgabeln und Gestänge sind nachfolgend ebenso als Schaltelemente zu verstehen. Daher ist der Begriff "Schaltelement" im Folgenden als Oberbegriff für diese Elemente zu verstehen.

Darüber hinaus ist eine Information, ob ein Schaltelement ausgerückt ist, vorteilhaft, um diese Information beispielsweise innerhalb einer Getriebesteuerung weiter zu verarbeiten.

Bei heutigen Getrieben sind sämtliche Komponenten, die die oben beschriebenen Funktionen umsetzen, gesondert vorgesehen, bzw. an unterschiedlichen Positionen angeordnet, was eine einfache Montage oder Demontage erschwert. Vor allem in der Montageplanung oder der Vormontage, die beispielsweise nicht am gleichen Ort stattfindet wie die Endmontage, sind diese Nachteile spürbar.

Die CN 108 561 549 A offenbart beispielsweise eine pneumatische automatische Steuervorrichtung für ein Triaxialgetriebe und ein Steuerverfahren der pneumatischen automatischen Steuervorrichtung für das Triaxialgetriebe. Die pneumatische automatische Steuerung besteht aus einem Gehäuse, elektromagnetischen Ventilen, drei Kolbenstangen, Schaltblöcken, drei Folgehebeln und drei Winkelsensoren. Auf einer Seite des Mantels sind drei Luftzylinder angeordnet, und die Kolbenstangen sind jeweils in den Luftzylindern angeordnet. Jede Kolbenstange ist mit einem Schaltblock versehen und jeder Schaltblock ist beweglich mit dem ringförmigen Wegsensor des entsprechenden Folgehebels verbunden. Linearbewegungen jedes Schaltblocks treiben den entsprechenden Folgehebel an. Eine Erstreckungsrichtung jedes Schaltblocks ist senkrecht zur axialen Richtung der entsprechenden Kolbenstange, während sich das vordere Ende aus dem Gehäuse heraus erstreckt. Eine elektromagnetische Ventilgruppe ist außerhalb des Gehäuses angeordnet, wobei die Luftzylinder über die elektromagnetischen Ventile mit einer Hochdruckluftquelle eines Fahrzeugs verbunden sind.

Die US 2018/0231105 A1 offenbart ein Antriebssystem mit einem Automatikgetriebe für ein Elektrofahrzeug. Mindestens ein 3-Positionen-Linearmotor und eine 2-Wege-Kupplung sind in der Übertragung enthalten. Das Getriebe umfasst zudem einen Planetenradsatz. Eine magnetische Kupplungsvorrichtung ist vorgesehen, um einen Teil der rotierenden mechanischen Energie eines einzelnen elektrischen Antriebsaggregats oder Motors als Reaktion auf ein elektrisches Signal magnetisch auf eine Getriebeausgangswelle zu übertragen, um die Winkelgeschwindigkeiten der Welle des Getriebeausgangs und einer Abtriebswelle des Elektroantriebs während einer Zustandsänderung zu synchronisieren.

Die DE 10 2005 028122 A1 offenbart ein automatisiertes Vorgelegegetriebe, insbesondere automatisiertes Schaltgetriebe oder Doppelkupplungsgetriebe, mit einem Gehäuse, mit wenigstens zwei in Längsrichtung ausgerichteten Wellen, mit einer Mehrzahl von Schaltkupplungen zum Einrichten von entsprechenden Gangstufen, wobei die Schaltkupplungen in Längsrichtung mittels einer mechanischen Schaltanordnung betätigt werden, und mit einer Aktuatoranordnung zum automatisierten Betätigen der Schaltanordnung, wobei die Aktuatoranordnung wenigstens einen hydraulischen Schaltzylinder, der in Längsrichtung wirkt, eine hydraulische Schaltung mit elektrisch angesteuerten Hydraulikventilen und eine elektrische Steuereinrichtung aufweist, die dazu ausgelegt ist, die Hydraulikventile anzusteuern. Der bzw. die Schaltzylinder, die Hydraulikventile und die Steuereinrichtung bilden ein vormontiertes Mechatronik-Modul, das seitlich an dem Gehäuse angebracht ist, derart, dass der oder die Schaltzylinder mit der Schaltanordnung gekoppelt sind.

Die DE 10 2014 105899 A1 betrifft eine Aktuatoranordnung für eine Schaltanordnung eines Kraftfahrzeuggetriebes, wobei die Schaltanordnung eine Mehrzahl von Schaltgliedern zum Ein- und Auslegen von Gangstufen des Kraftfahrzeuggetriebes aufweist, mit einem Aktuatorgehäuse, mit einer Mehrzahl von Hydraulikzylindern, die an dem Aktuatorgehäuse parallel zueinander festgelegt sind und die jeweils mit einem der Schaltglieder des Kraftfahrzeuggetriebes koppelbar sind. Dabei ist in das Aktuatorgehäuse eine Fluidverteilereinrichtung mit einer Drehschieberventileinrichtung integriert, mittels der ein Druckanschluss des Aktuatorgehäuses jeweils mit einem der Hydraulikzylinder verbindbar ist.

Die US 8 738 257 B2 betrifft ein hydraulisches Steuersystem für ein Doppelkupplungsgetriebe, umfassend mehrere Druck- und Durchfluss-Steuereinrichtungen und Logikventilanordnungen in Fluidverbindung mit mehreren Kupplungsaktoren und mit mehreren Synchroneinrichtungsaktoren. Die Kupplungsaktoren sind betreibbar, um mehrere Drehmomentübertragungseinrichtungen zu betätigen, und die Synchroneinrichtungsaktoren sind betreibbar, um mehrere Synchronanordnungen zu betätigen. Die selektive Aktivierung von Kombinationen der Druck-Steuermagnetventile und der Durchfluss-Steuermagnetventile sorgt dafür, dass ein Druckfluid zumindest einen der Kupplungsaktoren und der Synchroneinrichtungsaktoren aktiviert, um das Getriebe in ein gewünschtes Übersetzungsverhältnis zu schalten.

Die JP H07 127739 A betrifft die Bereitstellung eines elektronisch gesteuerten Getriebes, mit dem ein Schaltmechanismus mit einer Schaltwalze. Die Schaltwalze des Schaltmechanismus zum Schalten von Synchronisierungen eines Getriebegetriebemechanismus besteht aus geteilten Schaltwalzenkörpern, und die geteilten Schaltwalzenkörper sind über dem entsprechenden Synchronisierer angeordnet, um sie durch eine gemeinsame Antriebswelle zu stützen, und ein Zahnstangenmechanismus zum Antreiben dieser Antriebswelle ist vorgesehen, und entsprechende Schaltgabeln werden direkt durch die geteilten Schaltwalzenkörper angetrieben.

Die DE 10 2017 115069 A1 betrifft einen Getriebeaktor zum Ein- und Auslegen von Gängen und/oder zum Schalten von Gängen eines Schaltgetriebes, wie bspw. ein Doppelkupplungsgetriebe, eines Kraftfahrzeugs, mit einer Verstelleinheit zum translatorischen und rotatorischen Bewegen einer Schaltwelle mit einem ersten, an der Schaltwelle befestigten Betätigungsmechanismus, der zum Betätigen einer ersten Radsatzanordnung ausgelegt ist, und einem zweiten, an der Schaltwelle befestigten Betätigungsmechanismus, der zum Betätigen einer zweiten Radsatzanordnung ausgelegt ist, wobei der erste Betätigungsmechanismus auf der einen Seite der Verstelleinheit angeordnet ist und der zweite Betätigungsmechanismus auf der anderen Seite der Verstelleinheit angeordnet ist.

Die DE 10 2008 015173 A1 betrifft ein Getriebe für ein Kraftfahrzeug, mit einem Getriebegehäuse, das einen von einem Gehäuseboden begrenzten Innenraum aufweist, mit einer Ölwanne die an einer vom Innenraum abgewandten Seite am Gehäuseboden angeordnet ist, mit einem Aktuatorenblock, der im Innenraum am Gehäuseboden angeordnet ist und der mehrere hydraulische Schaltaktuatoren zum Betätigen von Schaltgliedern des Getriebes aufweist, und mit einem Hydraulikblock zum hydraulischen Ansteuern der Schaltaktuatoren, der in der Ölwanne an einer vom Innenraum abgewandten Seite am Gehäuseboden angeordnet ist.

Die DE 10 2016 101591 A1 betrifft eine Schaltanordnung für ein Kraftfahrzeuggetriebe mit einem Gehäuse, das eine Längsachse definiert, mit wenigstens einer ersten und einer zweiten Schaltstange, die zum Ein- und Auslegen von jeweiligen zugeordneten Gangstufen axial verschieblich in Bezug auf das Gehäuse gelagert sind, und mit einer Hydraulikanordnung, die wenigstens einen ersten und einen zweiten Hydraulikzylinder aufweist, wobei der erste Hydraulikzylinder dazu ausgelegt ist, die erste Schaltstange in wenigstens einer axialen Richtung axial zu verschieben, wobei der zweite Hydraulikzylinder dazu ausgelegt ist, die zweite Schaltstange in wenigstens einer axialen Richtung axial zu verschieben, wobei der erste und der zweite Hydraulikzylinder an einem gemeinsamen Hydraulikzylinderträger festgelegt sind. Dabei sind der erste und der zweite Hydraulikzylinder mit den zugeordneten Schaltstangen derart verbunden, dass sich die erste und die zweite Schaltstange ausgehend von dem Hydraulikzylinderträger in entgegengesetzte Richtungen erstrecken.

Daher ist es Aufgabe der vorliegenden Erfindung, ein Getriebe bereitzustellen, die alle oben beschriebenen Funktionalitäten aufweist und gleichzeitig das oben beschriebene Problem löst.

Diese Aufgabe wird durch die Gegenstände des unabhängigen Anspruchs gelöst. Vorteilhafte Weiterbildungen sind Gegenstand der Unteransprüche.

Erfindungsgemäß weist ein Getriebe mit zumindest zwei Schaltstellungen eine Aktuatoreinheit mit
einem Betätigungselement, das dazu ausgebildet ist, die zumindest zwei Schaltstellungen in dem Getriebe einzustellen, wobei
die Aktuatoreinheit ein Gehäuse aufweist, das in einem Gehäuse des Getriebes vorgesehen ist und die Aktuatoreinheit als separate Einheit innerhalb des Gehäuses des Getriebes vorgesehen ist.

Das Getriebe weist optional einen Montageabschnitt auf, der zur Montage der Aktuatoreinheit mit einer Montageausrichtung und/oder Positionierung gegenüber der Aktuatoreinheit ausgebildet ist, wobei weder der Montageabschnitt noch die besagte Montageausrichtung Bestandteil der vorliegenden Erfindung sind.

Erfindungsgemäß weist die Aktuatoreinheit gegenüber dem Getriebe eine Positionierung auf, die Positionier- und/oder Zentrierstifte aufweist, wobei die Positionier- und/oder Zentrierstifte derart ausgebildet sind, dass sie eine Montage der Aktuatoreinheit lediglich in einer bestimmten Ausrichtung an dem Getriebe erlauben, wozu die Positionier- und/oder Zentrierstifte, die an der Aktuatoreinheit und/oder an dem Getriebe vorgesehen sind, in entsprechende Öffnungen an dem Getriebe und/oder an der Aktuatoreinheit eingeführt werden, um eine fehlerfreie Montage sicherzustellen.

Demnach weist die Aktuatoreinheit mit einer Montageausrichtung, insbesondere das Gehäuse gegenüber einem Getriebe, eine Montageausrichtung auf. Dies bedeutet, dass die Seite des Gehäuses, mit der es in dem Getriebe, vorzugsweise in dem Getriebegehäuse, montiert wird, eine Geometrie aufweist, die insbesondere nicht punktsymmetrisch ist. Gleichzeitig weist auch eine Seite des Getriebes, an der die Aktuatoreinheit montiert wird, eine solche komplementäre Geometrie auf, wobei beide Geometrien zur Montage in Eingriff gebracht werden müssen, wozu die Aktuatoreinheit und das Getriebe entsprechend zueinander ausgerichtet werden müssen. Somit ist eine Montage der Aktuatoreinheit an dem Getriebe, bei der das Gehäuse falsch ausgerichtet ist, ausgeschlossen.

Die Montageausrichtung und/oder die Positionierung sind vorzugsweise dazu ausgebildet, mit einer Montageausrichtung und/oder Positionierung des Getriebes in Eingriff zu treten.

Das Getriebe weist gemäß der vorliegenden Erfindung zumindest zwei Schaltstellungen auf. Vorzugsweise umfasst eine der zumindest zwei Schaltstellungen eine Neutralstellung oder einen Rückwärtsgang des Getriebes. In einer bevorzugten Ausführungsform ist das Getriebe als Zweiganggetriebe vorgesehen, wobei zwei Schaltstellungen als Fahrgänge, also als ein erster und ein zweiter Gang, oder als Vorwärts- und Rückwärtsgang ausgebildet sind und eine dritte Schaltstellung vorgesehen ist, die als Neutralstellung ausgebildet ist.

Das Getriebe weist die Aktuatoreinheit wie oben beschrieben auf, wobei die Aktuatoreinheit zur Betätigung des Getriebes, insbesondere zur Einstellung von zumindest zwei Schaltstellungen in dem Getriebe, ausgebildet ist. Das Getriebe ist dadurch vorteilhafterweise leicht montier- und wartbar, da die Aktuatoreinheit als Einheit ausgebaut bzw. gewechselt werden kann. Dadurch können Montage- und Wartungszeiten erheblich verkürzt werden. Ferner kann die Gefahr von fehlerhaften Montagen verhindert werden, indem das Gehäuse der Aktuatoreinheit gegenüber dem Getriebe eine Montageausrichtung aufweist.

Die Aktuatoreinheit ist so in dem Getriebe positionierbar ausgebildet, dass sich das Betätigungselement in das Innere des Getriebes erstreckt. Die gesamte Aktuatoreinheit ist gemäß der vorliegenden Erfindung innerhalb des Getriebes vorgesehen.

Die Aktuatoreinheit weist vorzugsweise zumindest eine Signalschnittstelle auf, die dazu ausgebildet ist, ein Steuersignal zu empfangen und/oder ein Statussignal auszugeben. Das Steuersignal ist vorzugsweise dazu ausgebildet, dem Steuermittel eine Sollschaltstellung mitzuteilen. Das Steuermittel selbst ist weiter bevorzugt dazu ausgebildet aus dem Steuersignal, besonders bevorzugt aus der Sollschaltstellung und der Position des Betätigungselementes entlang der Betätigungsrichtung, eine vorliegende Schaltstellung zu ermitteln und den Aktuator entsprechend anzusteuern, um die vorliegende Schaltstellung der Sollschaltstellung anzugleichen. Das Statussignal enthält bevorzugt eine Information zu einer bestehenden Istschaltstellung. Diese Information kann von weiteren Verarbeitungsmitteln außerhalb des Getriebes verarbeitet werden.

Ist kein Steuermittel in der Aktuatoreinheit vorgesehen, so ist das empfangene Steuersignal vorzugsweise dazu ausgebildet, um den Aktuator innerhalb der Aktuatoreinheit und/oder weitere Elemente zum Betrieb der Aktuatoreinheit anzusteuern.

Die zumindest eine Signalschnittstelle ist bevorzugt dazu ausgebildet, Informationen, welche innerhalb der Aktuatoreinheit, beispielsweise durch ein Erfassungsmittel oder durch ein Steuermittel, gewonnen werden, an ein weiteres Element innerhalb oder außerhalb der Aktuatoreinheit weiterzugeben. Als solche Informationen kann beispielsweise eine Schaltstellung oder eine Position des Betätigungselementes übermittelt werden.

Die Signalschnittstelle ist bevorzugt dazu ausgebildet mit einem Fahrzeugnetzwerk, wie einem CAN-BUS oder mit einer übergeordneten Instanz, wie einem Getriebesteuergerät, in Verbindung zu treten.

Die zumindest eine Signalschnittstelle ist vorzugsweise dazu ausgebildet, zum Empfang des Steuersignals mit einem Element außerhalb eines Gehäuses des Getriebes in Verbindung zu treten. Die zumindest eine Signalschnittstelle der Aktuatoreinheit ist vorzugsweise dazu ausgebildet, sich durch das Getriebegehäuse hindurch zu erstrecken, beispielsweise durch eine Öffnung des Getriebegehäuses. Alternativ oder ergänzend weist die Aktuatoreinheit zumindest eine Energieschnittstelle auf, die dazu ausgebildet ist, Energie zum Betrieb der Aktuatoreinheit zu empfangen.

Die zumindest eine Energieschnittstelle ist bevorzugt dazu ausgebildet, zum Empfang der Energie mit einem Element außerhalb des Gehäuses des Getriebes in Verbindung zu treten. Die zumindest eine Energieschnittstelle der Aktuatoreinheit ist vorzugsweise dazu ausgebildet, sich durch das Getriebegehäuse hindurch zu erstrecken, beispielsweise durch eine Öffnung des Getriebegehäuses.

Das Betätigungselement ist vorzugsweise dazu ausgebildet, zur Einstellung der zumindest zwei Schaltstellungen, mit zumindest einem Schaltelement des Getriebes in Eingriff zu treten. Der Eingriff kann ferner vorzugsweise als permanenter Eingriff ausgebildet sein, wodurch eine Verschiebung des Betätigungselementes stets eine Beeinflussung des Schaltelementes, vorzugsweise eine Verschiebung oder Auslenkung des Schaltelementes, bewirkt.

Weiter ist das Betätigungselement vorzugsweise dazu ausgebildet, parallel zu einer Betätigungsrichtung verschoben zu werden.

So kann die Aktuatoreinheit als ein separates Bauteil in einem Getriebe vorgesehen werden, wobei ein Ein- und Ausbau zu Montage- oder Wartungszwecken erleichtert ist, da lediglich ein Bauteil betroffen ist.

Das Betätigungselement ist vorzugsweise einstückig mit dem zumindest einen Schaltelement ausgebildet. Dadurch kann eine weitere Integration von Bauteilen des Getriebes in die Aktuatoreinheit erreicht werden. Beispielsweise ist das Betätigungselement einstückig mit einer Schaltgabel ausgebildet, die mit einer entsprechenden Schaltmuffe des Getriebes oder einem anderen Schaltelement korrespondiert und vorzugsweise damit in Eingriff steht.

Das Gehäuse ist bevorzugt dazu ausgebildet, mittels Befestigungsmitteln, beispielsweise mittels Schrauben, in dem Getriebe befestigt zu werden. Weiter vorzugsweise kann das Gehäuse der Aktuatoreinheit selbst Verbindungselemente aufweisen, die dazu ausgebildet sind, mit entsprechend korrespondierenden Verbindungselementen des Getriebes, vorzugsweise mit Verbindungselementen des Gehäuses des Getriebes, in Kontakt zu treten, um eine Fixierung oder zumindest eine Ausrichtung der Aktuatoreinheit innerhalb des Getriebes zu erreichen. Durch derartige Verbindungselemente ausgebildete Verbindungen können beispielsweise als Nut-Feder-Verbindungen ausgeführt sein. Das Getriebe ist vorzugsweise für ein elektrisch angetriebenes Fahrzeug, vorzugsweise für ein Nutzfahrzeug, ausgebildet.

Die Aktuatoreinheit weist vorzugsweise einen Aktuator auf, der dazu ausgebildet ist, das Betätigungselement parallel zu der Betätigungsrichtung zu verschieben.

Der Aktuator ist vorzugsweise als fluidischer Aktuator, insbesondere als pneumatischer oder hydraulischer Aktuator, ausgebildet. Alternativ ist der Aktuator bevorzugt als elektromechanischer oder motorischer Aktuator ausgebildet. Somit ist die Energieversorgung der Aktuatoreinheit bzw. des Aktuators durch entsprechende Gestaltung der Leitungsführung konstruktiv gut lösbar, da entsprechende fluidische Leitungen oder Leitungen zur Zuführung elektrischen Stroms gut in vorhandenen Zwischenräumen geführt werden können.

Vorzugsweise sind bei fluidischer Ausbildung, insbesondere bei pneumatischer oder hydraulischer Ausbildung, des Aktuators Stellglieder, die zur Betätigung des Aktuators ausgebildet sind, innerhalb der Aktuatoreinheit, bevorzugt innerhalb des Gehäuses der Aktuatoreinheit, vorgesehen. Derartige Stellglieder sind beispielsweise Magnetventile, die zur Steuerung des Fluidstroms ausgebildet sind.

Die Aktuatoreinheit weist vorzugsweise zumindest ein Steuermittel auf, das zur Steuerung der Aktuatoreinheit ausgebildet ist.

Vorzugsweise weist die Aktuatoreinheit zumindest ein Erfassungsmittel auf, das zur Erfassung einer Position des Betätigungselements entlang der Betätigungsrichtung ausgebildet ist.

Das zumindest eine Steuermittel ist vorzugsweise als elektronisches Steuermittel ausgebildet. Ein solches Steuermittel kann vorzugsweise ein elektronisches Steuergerät aufweisen, das zur Steuerung der Aktuatoreinheit ausgebildet ist.

Das zumindest eine Erfassungsmittel ist vorzugsweise als Wegsensor ausgebildet. Ein derartiger Wegsensor kann in einer beliebigen bekannten Ausführung vorliegen.

Beispielsweise kann dieser Sensor nach einem elektromagnetischen Prinzip arbeiten.

Besonders bevorzugt ist der Sensor als Hall-Sensor ausgebildet. Alternativ kann aus der Verschiebung des Betätigungselements über eine mechanische Kopplung eine Bewegung eines weiteren Elements, beispielsweise eine Drehbewegung, hervorgerufen werden. Diese Drehbewegung inkrementiert bevorzugt einen Zähler, besonders bevorzugt in dem Steuermittel, so dass aus dem Wert des Zählers die Position des Betätigungselements abgeleitet werden kann.

Das Erfassungsmittel ist vorzugsweise integral mit dem Steuermittel ausgebildet. Dadurch wird vorteilhafterweise eine kompakte Bauweise ermöglicht, so dass die Aktuatoreinheit insgesamt kompakt bauend ausgebildet werden kann. Die Betätigungsrichtung ist vorzugsweise als Gerade oder als Kreisbahn ausgebildet. Allgemein können auch Ausbildungen der Betätigungsrichtung vorgesehen sein, die sowohl Kreis- als auch Geradenelemente aufweisen.

Das Getriebe weist ein Getriebegehäuse auf und ist ferner dazu ausgebildet, die Aktuatoreinheit vollständig in dem Getriebegehäuse aufzunehmen.

Die Erfindung ist nicht auf die oben beschriebenen Ausführungsformen begrenzt. Es lassen sich darüber hinaus weitere Ausführungsformen durch Kombination, Ersetzung oder Weglassen einzelner Merkmale erreichen.

Nachfolgend erfolgt die Beschreibung bevorzugter Ausführungsformen der Erfindung mittels der beigefügten Zeichnungen.

Im Einzelnen zeigen
- Fig. 1: eine erste Ausführungsform einer Aktuatoreinheit, auf die die vorliegende Erfindung anwendbar ist, und
- Fig. 2: eine zweite Ausführungsform einer Aktuatoreinheit, auf die die vorliegende Erfindung anwendbar ist.

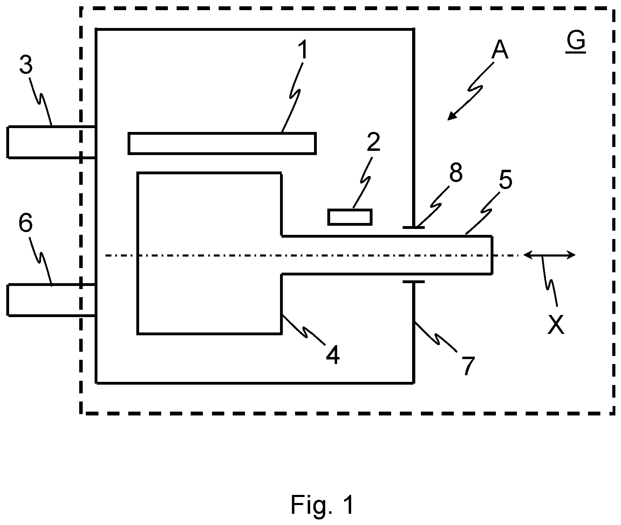

**Fig. 1** zeigt eine erste Ausführungsform einer Aktuatoreinheit A, auf die die vorliegende Erfindung anwendbar ist.

Es ist eine Aktuatoreinheit A gezeigt, die innerhalb eines Getriebes G, d.h. innerhalb eines Getriebegehäuses des Getriebes G vorgesehen ist.

Die Aktuatoreinheit A weist ein Gehäuse 7 auf, welches dazu ausgebildet ist, innerhalb des Getriebes G, beispielsweise innerhalb des Getriebegehäuses, vorgesehen zu werden. Das Gehäuse 7 ist darüber hinaus dichtend gegenüber dem Getriebe G ausgebildet, so dass die Aktuatoreinheit A als eine separate Einheit innerhalb des Getriebes G vorgesehen werden kann.

Das Gehäuse 7 weist eine Öffnung 8 auf, die von einem Betätigungselement 5 durchdrungen ist. Das Betätigungselement 5 erstreckt sich dabei mit seinem in der Zeichnung rechten Ende in das Getriebe G hinein. Dabei ist das Betätigungselement 5 dazu ausgebildet, mit zumindest einem Schaltelement (nicht gezeigt) des Getriebes G in Eingriff zu treten, um in dem Getriebe G zumindest zwei Schaltstellungen einzustellen.

Das Gehäuse 7 der Aktuatoreinheit A beinhaltet einen Aktuator 4, der mit dem Betätigungselement 5 verbunden ist. Der Aktuator 4 ist dazu ausgebildet, das Betätigungselement 5 parallel zu einer Betätigungsrichtung X zu verschieben.

Die Betätigungsrichtung X ist hier als Gerade ausgebildet, so dass eine Verschiebung des Betätigungselements 5 parallel zur Betätigungsrichtung X einer translatorischen Verschiebung des Betätigungselements 5 entspricht. Ferner beinhaltet das Gehäuse 7 der Aktuatoreinheit A ein Erfassungsmittel 2, das dazu ausgebildet ist, eine Position des Betätigungselements 5 parallel zur Betätigungsrichtung X zu erfassen. Dadurch ist es möglich, die Position des Betätigungselements 5 parallel zur Betätigungsrichtung X zu bestimmen, wodurch darüber hinaus eine indirekte Bestimmung der Schaltstellung im Getriebe G ermöglicht wird, da das Betätigungselement 5 mit einem Schaltelement in Eingriff steht und somit dessen Stellung aus der Position des Betätigungselements 5 bestimmbar ist.

Ferner beinhaltet das Gehäuse 7 ein Steuermittel 1, das dazu ausgebildet ist, die Steuerung der Aktuatoreinheit A durchzuführen. Zu diesem Zweck ist das Steuermittel 1 dazu ausgebildet, den Aktuator 4 anzusteuern, um eine Verschiebung parallel zur Betätigungsrichtung X des Betätigungselements 5 zu veranlassen. Ferner ist das Steuermittel 1 dazu ausgebildet, Steuersignale einer übergeordneten Instanz, beispielsweise einer Getriebesteuervorrichtung, zu empfangen.

Das Gehäuse 7 der Aktuatoreinheit A weist ferner eine Signalschnittstelle 3 auf, die dazu ausgebildet ist, Steuersignale einer höheren Instanz, beispielsweise einer Getriebesteuervorrichtung, zu empfangen und dem Steuermittel 1 zur Verfügung zu stellen. In der gezeigten Ausführungsform durchdringt die Signalschnittstelle 3 die Grenze des Getriebes G, also insbesondere das Getriebegehäuse des Getriebes G. Die Signalschnittstelle 3 ist ferner dazu ausgebildet, Statussignale, beispielsweise eine Schaltstellung, an Vorrichtungen außerhalb des Getriebes, beispielsweise an die Getriebesteuervorrichtung, weiterzugeben.

Ferner ist eine Energieschnittstelle 6 gezeigt, die ebenso wie die Signalschnittstelle 3 das Getriebegehäuse des Getriebes G durchdringt. Die Energieschnittstelle 6 ist dazu ausgebildet, Energie zum Betrieb der Aktuatoreinheit A zu empfangen und entsprechenden Elementen der Aktuatoreinheit A, insbesondere dem Steuermittel 1, dem Erfassungsmittel 2 und dem Aktuator 4, zuzuführen.

Sowohl die Signalschnittstelle 3 als auch die Energieschnittstelle 6 sind dazu ausgebildet, mit Elementen außerhalb des Getriebes G in Verbindung zu treten und darüber Signale bzw. Energie zu empfangen.

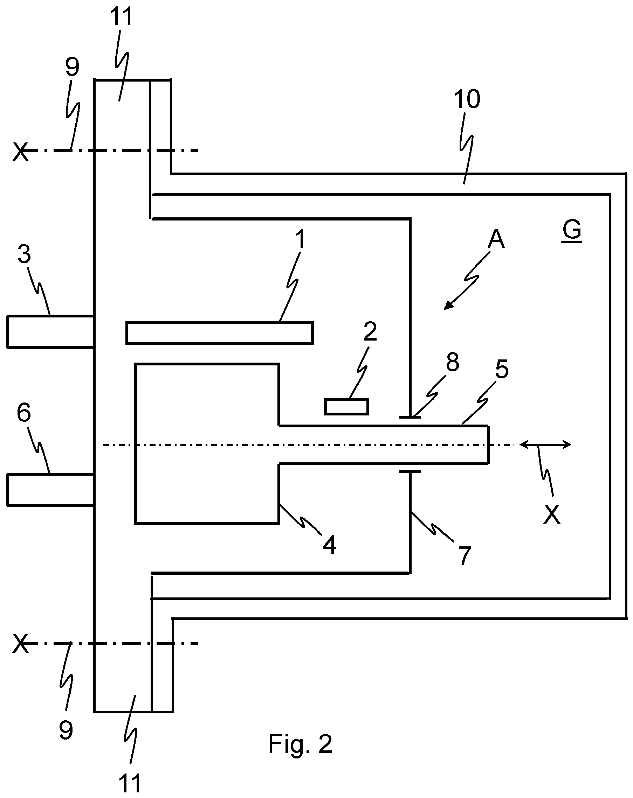

**Fig. 2** zeigt eine zweite Ausführungsform einer Aktuatoreinheit A, auf die die vorliegende Erfindung anwendbar ist.

Der Aufbau dieser Aktuatoreinheit A ist im Wesentlichen zu der Aktuatoreinheit A aus Fig. 1 identisch. Es besteht jedoch ein Unterschied in der Anbringung an dem Getriebe G.

Das Getriebe G ist hier im Wesentlichen durch ein Getriebegehäuse 10 angedeutet, das im Schnitt dargestellt und nach links geöffnet ist. Weitere Elemente des Getriebes G wurden aus Gründen der Übersichtlichkeit nicht dargestellt. Die Aktuatoreinheit A ist in das Getriebegehäuse 10 von links eingeführt, so dass das Betätigungselement 5 sich im Inneren des Getriebes G befindet, und dazu ausgebildet ist, zumindest zwei Schaltstellungen einzustellen.

Die Aktuatoreinheit A und das Getriebegehäuse 10 sind dazu ausgebildet, mit Befestigungselementen 9, beispielsweise mit Schrauben, befestigt zu werden. Dadurch ist die Aktuatoreinheit A gegenüber dem Getriebe G fixiert und positioniert. Zur Befestigung weist die Aktuatoreinheit A Befestigungsabschnitte 11 auf. Die Aktuatoreinheit A verschließt somit die linke Öffnung des Getriebegehäuses 10.

Die Signalschnittstelle 3 und die Energieschnittstelle 6 der Aktuatoreinheit A sind so an der Aktuatoreinheit A vorgesehen, dass sie außerhalb des Getriebegehäuses 10 positioniert sind. Dadurch können diese Schnittstellen 3, 6 problemlos mit weiteren Elementen außerhalb des Getriebes G in Kontakt treten, ohne dass weitere Öffnungen in dem Getriebegehäuse 10 vorgesehen werden müssen.

Es versteht sich, dass auch Ausführungsformen vorgesehen sein können, bei denen sich eine Öffung zur Einführung der Aktuatoreinheit A lediglich über einen Teil einer Gehäusebreite des Getriebes G erstreckt.

Die nachfolgende Beschreibung der Funktionsweise der Aktuatoreinheit A sowie spezieller Ausführungsformen erfolgt, wenn nicht anders vermerkt, unter Bezugnahme auf beide Figuren.

Die Funktionsweise der Aktuatoreinheit A stellt sich wie folgt dar.

Wird über die Signalschnittstelle 3 ein Steuersignal an die Aktuatoreinheit A übertragen, so wird dieses in dem Steuermittel 1 verarbeitet. Das Steuermittel 1 ist dazu ausgebildet, durch die mittels des Erfassungsmittels 2 erfasste Position des Betätigungselements 5, zu bestimmen, welche Schaltstellung aktuell im Getriebe G vorherrscht. Entspricht die vorherrschende Schaltstellung (Istschaltstellung) nicht der Schaltstellung, die über das Steuersignal an das Steuermittel 1 übermittelt wurde (Sollschaltstellung), so steuert das Steuermittel 1 den Aktuator 4 an und veranlasst dadurch eine Verschiebung des Betätigungselements 5 parallel zur Bestätigungsrichtung X. Dadurch wird innerhalb des Getriebes G eine neue Schaltstellung eingestellt und somit ein Gang bzw. eine Neutralstellung eingelegt.

Die Aktuatoreinheit A ist somit als separate und in sich geschlossene Einheit ausgebildet, welche als solche in das Getriebe G eingebaut werden kann. Das Gehäuse 7 der Aktuatoreinheit A ist dazu ausgebildet, in dem Getriebe G fixiert zu werden. Dazu sind beispielsweise Verschraubungsmöglichkeiten zwischen Gehäuse 7 und Getriebe G vorgesehen.

Die hier besprochene Aktuatoreinheit A kann in verschiedensten Ausführungsformen vorliegen, welche nachfolgend genauer erläutert werden sollen.

Beispielsweise kann der Aktuator 4 als fluidischer Aktuator, insbesondere als hydraulischer oder als pneumatischer Aktuator, ausgebildet sein. In einer solchen Ausführungsform ist die Energieschnittstelle 6 dazu ausgebildet, Fluid, also Hydraulikflüssigkeit oder Druckluft, zu dem Aktuator 4 zu leiten, um diesem darüber Druck und somit Energie zum Betrieb der Aktuatoreinheit A zur Verfügung zu stellen.

Ist der Aktuator 4 hingegen elektromechanisch oder elektrisch ausgebildet, und hier insbesondere als Elektromotor oder als magnetischer Mechanismus ausgebildet, so ist die Energieschnittstelle 6 als elektrische Schnittstelle ausgebildet, die Energie in Form von elektrischem Strom an den Aktuator 4 zum Betrieb der Aktuatoreinheit A leitet.

Das Steuermittel 1 kann beispielsweise als elektronisches Steuermittel, insbesondere als Steuergerät, ausgebildet sein. In einem solchen Fall steht es mit der

Signalschnittstelle 3 insbesondere zum Empfang von Steuersignalen in Verbindung, wobei die Signalschnittstelle 3 als elektronische Schnittstelle, insbesondere als Datenschnittstelle, ausgebildet ist, worüber Steuerdaten beispielsweise eines Fahrzeugs, in dem das Getriebe G vorgesehen ist, an die Aktuatoreinheit A und somit an das Steuermittel 1 übermittelt werden können.

Eine weitere Ausführungsform, auf die die vorliegende Erfindung anwendbar ist, weist kein Steuermittel 1 innerhalb des Gehäuses 7 auf. Hier ist das Steuermittel 1 außerhalb des Gehäuses 7 vorgesehen, wobei es beispielsweise auf dem Gehäuse 7 angebracht ist. Das Steuermittel 1 kann jedoch auch entfernt von dem Gehäuse 7 vorgesehen sein, wobei beispielsweise eine Verbindung zwischen der Signalschnittstelle 3 und dem Steuermittel 1 vorgesehen ist, um einerseits die Steuerung der Aktuatoreinheit A, insbesondere des Aktuators 4, und andererseits den Empfang von Daten, insbesondere durch das Erfassungsmittel 2, zu ermöglichen.

Ferner kann das Erfassungsmittel 2 beispielsweise als elektronischer Sensor ausgebildet sein. Signale, welche der Position des Betätigungselements 5 parallel zur Betätigungsrichtung X entsprechen, können dann einem elektronischen Steuermittel 1 über eine Datenverbindung zur Verfügung gestellt werden. Alternativ kann das Erfassungsmittel 2 jedoch auch mechanisch oder elektromechanisch ausgebildet sein. Eine Verschiebung des Betätigungselements 5 parallel zur Betätigungsrichtung X kann beispielsweise in dem Erfassungsmittel 2 einen mechanischen Effekt, beispielsweise eine Drehbewegung, hervorrufen, welche beispielsweise elektronisch erfasst und als Winkelsumme aufsummiert werden kann und somit zur Ermittlung der Position des Betätigungselements 5 parallel zur Betätigungsrichtung X an das Steuermittel 1 übermittelt werden kann.

In der gezeigten Ausführungsform sind die Signalschnittstelle 3 und die Energieschnittstelle 6 so dargestellt, dass sie die Grenze des Getriebes G, also insbesondere das Getriebegehäuse des Getriebes G, durchdringen. In einer anderen Ausführungsform kann jedoch zumindest eine dieser Schnittstellen 3, 6 auch so ausgebildet sein, dass sie sich lediglich innerhalb des Getriebes G befindet. Hierbei ist das Getriebe G dazu ausgebildet, die entsprechende Schnittstelle 3, 6 entsprechend zu versorgen.

Bei fluidischer Ausbildung des Aktuators 4 sind beispielsweise Stellglieder, insbesondere Magnetventile, zur Regelung des Fluidstroms vorgesehen. Diese sind dann beispielsweise ebenfalls innerhalb der Aktuatoreinheit A, insbesondere innerhalb des Gehäuses 7, vorgesehen, so dass der Charakter der Aktuatoreinheit A als in sich geschlossenes Bauteil nicht gefährdet wird. Diese Stellglieder sind beispielsweise dazu ausgebildet, durch das Steuermittel 1 angesteuert zu werden. Auf diese Weise ist das Steuermittel 1 in der Lage, den Fluidstrom zu steuern und den Aktuator 4 entsprechend zu betätigen.

In der gezeigten Ausführungsform ist das Betätigungselement 5 als Stab ausgebildet, welcher sich ausgehend von dem Aktuator 4 nach rechts durch die Öffnung 8 hindurch in das Getriebe G hinein erstreckt. Eine Verschiebung des Betätigungselements 5 parallel zur Betätigungsrichtung X ist dabei als translatorische Verschiebung vorgesehen, die entlang einer Stabachse erfolgt. Darüber hinaus können jedoch Ausführungsformen vorgesehen sein, bei denen beispielsweise das Betätigungselement 5 nicht als Stab ausgebildet ist, der entlang seiner Stabachse verschiebbar ausgebildet ist. Beispielsweise kann ein schwenkbares Betätigungselement 5 vorgesehen sein. Darüber hinaus muss die Betätigungsrichtung X nicht einer Geraden entsprechen, beispielsweise kann das Betätigungselement 5 auch dazu ausgebildet sein, bei Betätigung eine Kreisbewegung oder eine anders geartete Bewegung auszuführen.

Die Öffnung 8 kann zusammen mit dem Betätigungselement 5 dichtend gegenüber dem Getriebe G ausgebildet sein, so dass hierüber insbesondere kein Öl oder Abrieb aus dem Getriebe G in das Gehäuse 7 der Aktuatoreinheit A eindringen kann.

Bei der Ausführungsform aus Fig. 2 kann die Aktuatoreinheit A dichtend gegenüber dem Getriebegehäuse 10 ausgeführt sein. Dazu kann beispielsweise eine Dichtung an einem Bereich der Aktuatoreinheit A, beispielsweise an einem Befestigungsabschnitt 11, vorgesehen sein, der mit dem Getriebegehäuse 10 in Kontakt tritt. So wird ein sicherer Verschluss des Getriebegehäuses 10 gegenüber äußeren Einflüssen, wie Schmutz oder Staub sichergestellt.

## Patentansprüche

1. Getriebe (G) mit zumindest zwei Schaltstellungen, aufweisend:
eine Aktuatoreinheit (A), aufweisend:
ein Betätigungselement (5), das dazu ausgebildet ist, die zumindest zwei Schaltstellungen in dem Getriebe (G) einzustellen, und
ein Gehäuse (7), das in einem Gehäuse des Getriebes (G) vorgesehen ist, wobei die Aktuatoreinheit (A) als separate Einheit innerhalb des Gehäuses des Getriebes (G) vorgesehen ist, **dadurch gekennzeichnet, dass**
die Aktuatoreinheit (A) gegenüber dem Getriebe (G) eine Positionierung aufweist, die Positionier- und/oder Zentrierstifte aufweist, wobei die Positionier- und/oder Zentrierstifte derart ausgebildet sind, dass sie eine Montage der Aktuatoreinheit lediglich in einer bestimmten Ausrichtung an dem Getriebe erlauben, wozu die Positionier- und/oder Zentrierstifte, die an der Aktuatoreinheit und/oder an dem Getriebe vorgesehen sind, in entsprechende Öffnungen an dem Getriebe und/oder an der Aktuatoreinheit eingeführt werden, um eine fehlerfreie Montage sicherzustellen.

2. Getriebe (G) nach Anspruch 1, wobei
das Betätigungselement (5) dazu ausgebildet ist, zur Einstellung der zumindest zwei Schaltstellungen, mit zumindest einem Schaltelement des Getriebes (G) in Eingriff zu treten, und/oder wobei
das Betätigungselement (5) dazu ausgebildet ist, parallel zu einer Betätigungsrichtung (X) verschoben zu werden.

3. Getriebe (G) nach Anspruch 2, wobei
das Betätigungselement (5) einstückig mit zumindest einem Schaltelement für das Getriebe (G) ausgebildet ist.

4. Getriebe (G) nach einem der vorangegangenen Ansprüche, aufweisend
einen Aktuator (4) der dazu ausgebildet ist, das Betätigungselement (5) parallel zu der Betätigungsrichtung (X) zu verschieben.

5. Getriebe (G) nach Anspruch 4, wobei
der Aktuator (4) als pneumatischer, hydraulischer, elektromechanischer oder motorischer Aktuator ausgebildet ist.

6. Getriebe (G) nach Anspruch 5, wobei
bei pneumatischer oder hydraulischer Ausbildung des Aktuators (4) Stellglieder, die zur Betätigung des Aktuators (4) ausgebildet sind, in der Aktuatoreinheit (A) vorgesehen sind.

7. Getriebe (G) nach einem der vorangegangenen Ansprüche, aufweisend:
- zumindest ein Steuermittel (1), das zur Steuerung der Aktuatoreinheit (A) ausgebildet ist, und/oder
- zumindest ein Erfassungsmittel (2), das zur Erfassung einer Position des Betätigungselements (5) entlang der Betätigungsrichtung (X) ausgebildet ist.

8. Getriebe (G) nach Anspruch 7, wobei
das zumindest eine Steuermittel (1) als elektronisches Steuermittel ausgebildet ist, oder wobei das zumindest eine Erfassungsmittel (2) als Wegsensor ausgebildet ist.

9. Getriebe (G)) nach Anspruch 7 oder 8, wobei
das zumindest eine Steuermittel (1) und das zumindest eine Erfassungsmittel (2) integral ausgebildet sind.

10. Getriebe (G) nach einem der vorangegangenen Ansprüche, aufweisend:
- zumindest eine Signalschnittstelle (3), die dazu ausgebildet ist, ein Steuersignal zu empfangen, und/oder ein Statussignal auszugeben und/oder
- zumindest eine Energieschnittstelle (6), die dazu ausgebildet ist, Energie zum Betrieb der Aktuatoreinheit zu empfangen.

11. Getriebe (G) nach Anspruch 10, wobei
die zumindest eine Signalschnittstelle (3) dazu ausgebildet ist, zum Empfang des Steuersignals mit einem Element außerhalb des Gehäuses des Getriebes (G) in Verbindung zu treten, und/oder wobei
die zumindest eine Energieschnittstelle (6) dazu ausgebildet ist, zum Empfang der Energie mit einem Element außerhalb des Gehäuses des Getriebes (G) in Verbindung zu treten.

12. Getriebe (G) nach einem der vorangegangenen Ansprüche, wobei die Betätigungsrichtung (X) als Gerade oder als Kreisbahn ausgebildet ist.

13. Getriebe (G) nach einem der vorangegangenen Ansprüche, wobei
das Gehäuse (7) der Aktuatoreinheit (A) die Positionierung aufweist.

14. Getriebe (G) nach einem der vorangegangenen Ansprüche, wobei
das Getriebe (G) für ein elektrisch angetriebenes Fahrzeug, vorzugsweise für ein Nutzfahrzeug, ausgebildet ist.

## Claims

1. Transmission (G) with at least two shift positions, having:
an actuator unit (A) having:
an actuating element (5) which is designed to adjust the at least two shift positions in the transmission (G), and
a housing (7) which is provided in a housing of the transmission (G), wherein the actuator unit (A) is provided as a separate unit within the housing of the transmission (G), **characterized in that**
the actuator unit (A) has, relative to the transmission (G), a positioning which has positioning and/or centring pins, wherein the positioning and/or centring pins are designed such that they allow assembly of the actuator unit only in a specific orientation on the transmission, for which purpose the positioning and/or centring pins, which are provided on the actuator unit and/or on the transmission, are inserted into corresponding openings on the transmission and/or on the actuator unit to ensure error-free assembly.

2. Transmission (G) according to claim 1, wherein
the actuating element (5) is designed to engage with at least one shifting element of the transmission (G) in order to adjust the at least two shift positions, and/or wherein
the actuating element (5) is designed to be displaced parallel to an actuation direction (X).

3. Transmission (G) according to claim 2, wherein
the actuating element (5) is formed integrally with at least one shifting element for the transmission (G).

4. Transmission (G) according to any one of the preceding claims, having
an actuator (4) which is designed to displace the actuating element (5) parallel to the actuation direction (X).

5. Transmission (G) according to claim 4, wherein
the actuator (4) is designed as a pneumatic, hydraulic, electromechanical or motorised actuator.

6. Transmission (G) according to claim 5, wherein
in a pneumatic or hydraulic configuration of the actuator (4), actuating members which are designed to actuate the actuator (4) are provided in the actuator unit (A).

7. Transmission (G) according to any one of the preceding claims, having:
- at least one control means (1) which is designed to control the actuator unit (A), and/or
- at least one detection means (2) which is designed to detect a position of the actuating element (5) along the actuation direction (X).

8. Transmission (G) according to claim 7, wherein
the at least one control means (1) is designed as an electronic control means, or wherein the at least one detection means (2) is designed as a path sensor.

9. Transmission (G) according to claim 7 or 8, wherein
the at least one control means (1) and the at least one detection means (2) are integrally formed.

10. Transmission (G) according to any one of the preceding claims, having:
- at least one signal interface (3) which is designed to receive a control signal and/or to emit a status signal, and/or
- at least one power interface (6) which is designed to receive power for operation of the actuator unit.

11. Transmission (G) according to claim 10, wherein
the at least one signal interface (3) is designed to establish a connection to an element outside the housing of the transmission (G) in order to receive the control signal, and/or wherein
the at least one power interface (6) is designed to establish a connection to an element outside the housing of the transmission (G) in order to receive the power.

12. Transmission (G) according to any one of the preceding claims, wherein
the actuation direction (X) is designed as a straight line or as a circular path.

13. Transmission (G) according to any one of the preceding claims, wherein
the housing (7) of the actuator unit (A) has the positioning.

14. Transmission (G) according to any one of the preceding claims, wherein
the transmission (G) is designed for an electrically driven vehicle, preferably for a utility vehicle.

## Revendications

1. Transmission (G) avec au moins deux positions de commutation, présentant :
une unité d'actionneur (A), présentant :
un élément d'actionnement (5) qui est conçu pour régler les au moins deux positions de commutation dans la transmission (G), et
un carter (7) qui est prévu dans un carter de la transmission (G), dans laquelle l'unité d'actionneur (A) est prévue en tant qu'unité séparée à l'intérieur du carter de la transmission (G), **caractérisée en ce que**
l'unité d'actionneur (A) présente par rapport à la transmission (G) un positionnement qui présente des goupilles de positionnement et/ou de centrage, dans laquelle les goupilles de positionnement et/ou de centrage sont conçues de sorte qu'elles permettent un montage de l'unité d'actionneur uniquement dans une certaine orientation sur la transmission, montage pour lequel les goupilles de positionnement et/ou de centrage qui sont prévues sur l'unité d'actionneur et/ou sur la transmission sont introduites dans des ouvertures correspondantes sur la transmission et/ou sur l'unité d'actionneur pour garantir un montage sans erreur.

2. Transmission (G) selon la revendication 1, dans laquelle
l'élément d'actionnement (5) est conçu pour entrer en prise avec au moins un élément de commutation de la transmission (G) pour régler les au moins deux positions de commutation, et/ou dans laquelle
l'élément d'actionnement (5) est conçu pour être déplacé parallèlement à une direction d'actionnement (X).

3. Transmission (G) selon la revendication 2, dans laquelle
l'élément d'actionnement (5) est conçu d'un seul tenant avec au moins un élément de commutation pour la transmission (G).

4. Transmission (G) selon l'une quelconque des revendications précédentes, présentant
un actionneur (4) qui est conçu pour déplacer l'élément d'actionnement (5) parallèlement à la direction d'actionnement (X).

5. Transmission (G) selon la revendication 4, dans laquelle
l'actionneur (4) est conçu en tant qu'actionneur pneumatique, hydraulique, électromécanique ou motorisé.

6. Transmission (G) selon la revendication 5, dans laquelle
dans une configuration pneumatique ou hydraulique de l'actionneur (4), des organes d'actionnement qui sont conçus pour actionner l'actionneur (4) sont prévus dans l'unité d'actionneur (A).

7. Transmission (G) selon l'une quelconque des revendications précédentes, présentant :
- au moins un moyen de commande (1) qui est conçu pour commander l'unité d'actionneur (A), et/ou
- au moins un moyen de détection (2) configuré pour détecter une position de l'élément d'actionnement (5) le long de la direction d'actionnement (X).

8. Transmission (G) selon la revendication 7, dans laquelle
le au moins un moyen de commande (1) est conçu en tant que moyen de commande électronique, ou dans laquelle le au moins un moyen de détection (2) est conçu en tant que capteur de course.

9. Transmission (G) selon la revendication 7 ou 8, dans laquelle
le au moins un moyen de commande (1) et le au moins un moyen de détection (2) sont conçus intégralement.

10. Transmission (G) selon l'une quelconque des revendications précédentes, présentant :
- au moins une interface de signal (3) qui est conçue pour recevoir un signal de commande et/ou émettre un signal d'état et/ou
- au moins une interface d'énergie (6) qui est conçue pour recevoir de l'énergie pour faire fonctionner l'unité d'actionneur.

11. Transmission (G) selon la revendication 10, dans laquelle
la au moins une interface de signal (3) est conçue pour établir une connexion avec un élément à l'extérieur du carter de la transmission (G) pour recevoir le signal de commande, et/ou dans laquelle
la au moins une interface d'énergie (6) est conçue pour établir une connexion avec un élément à l'extérieur du carter de la transmission (G) pour recevoir l'énergie.

12. Transmission (G) selon l'une quelconque des revendications précédentes, dans laquelle
la direction d'actionnement (X) est conçue en tant que ligne droite ou en tant que trajectoire circulaire.

13. Transmission (G) selon l'une quelconque des revendications précédentes, dans laquelle
le carter (7) de l'unité d'actionneur (A) présente le positionnement.

14. Transmission (G) selon l'une quelconque des revendications précédentes, dans laquelle
la transmission (G) est conçue pour un véhicule à transmission électrique, de préférence pour un véhicule utilitaire.
